(19) Europäisches Patentamt
European Patent Office
Office européen des brevets

(11) **EP 4 333 102 A1**

(12) **EUROPEAN PATENT APPLICATION**
published in accordance with Art. 153(4) EPC

(43) Date of publication:
**06.03.2024 Bulletin 2024/10**

(21) Application number: **22901784.3**

(22) Date of filing: **30.11.2022**

(51) International Patent Classification (IPC):
*H01M 4/13* $^{(2010.01)}$    *H01M 4/131* $^{(2010.01)}$
*H01M 4/134* $^{(2010.01)}$    *H01M 4/139* $^{(2010.01)}$
*H01M 4/04* $^{(2006.01)}$    *H01M 10/42* $^{(2006.01)}$
*H01M 10/052* $^{(2010.01)}$    *H01M 4/38* $^{(2006.01)}$
*H01M 4/48* $^{(2010.01)}$    *H01M 4/62* $^{(2006.01)}$

(52) Cooperative Patent Classification (CPC):
H01M 4/02; H01M 4/04; H01M 4/13; H01M 4/131;
H01M 4/134; H01M 4/139; H01M 4/38; H01M 4/48;
H01M 4/62; H01M 10/052; H01M 10/42;
Y02E 60/10

(86) International application number:
**PCT/KR2022/019229**

(87) International publication number:
**WO 2023/101426 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021   KR 20210172282**

(71) Applicant: **LG Energy Solution, Ltd.
Seoul 07335 (KR)**

(72) Inventors:
• **JEON, Seoyoung
  Daejeon 34122 (KR)**
• **KIM, Sarah
  Daejeon 34122 (KR)**
• **KWON, Yohan
  Daejeon 34122 (KR)**

(74) Representative: **Hoffmann Eitle
Patent- und Rechtsanwälte PartmbB
Arabellastraße 30
81925 München (DE)**

(54) **ANODE FOR LITHIUM SECONDARY BATTERY, MANUFACTURING METHOD FOR ANODE FOR LITHIUM SECONDARY BATTERY, AND LITHIUM SECONDARY BATTERY INCLUDING ANODE**

(57)    Disclosed are a negative electrode for a lithium secondary battery, a method for manufacturing a lithium secondary battery, and a lithium secondary battery.

[Figure 1]

**Description**

[Technical Field]

This application claims priority to and the benefit of Korean Patent Application No.10-2021-0172282 filed with the Korean Intellectual Property Office on December 3, 2021, the entire contents of which are incorporated herein by reference.

The present application relates to a negative electrode for a lithium secondary battery, a method for manufacturing a negative electrode for a lithium secondary battery, and a lithium secondary battery including the negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the increase of the technological development and demand for mobile devices, the demand for secondary batteries is also sharply increasing as an energy source. Among such secondary batteries, lithium secondary batteries having high energy density and voltage, long cycle life, and low self-discharge rate have been commercialized and widely used. In addition, as an electrode for such a high-capacity lithium secondary battery, research is being actively conducted on a method for manufacturing a high-density electrode having a higher energy density per unit volume.

In general, a secondary battery includes a positive electrode, a negative electrode, an electrolyte solution, and a separator. The negative electrode includes a negative electrode active material for intercalating and deintercalating lithium ions from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, the silicon has a problem in that volume change (shrinkage or expansion) occurs during the intercalation/deintercalation of lithium ions, resulting in deterioration of mechanical stability, and as a result, cycle characteristics are impaired. Therefore, it is necessary to develop a material having structural stability, which is excellent in stability when used as an active material of an electrochemical device, and capable of ensuring cycle characteristics.

In addition, in the case of using a silicon-based negative electrode active material, a problem arises in that the initial irreversible capacity is large. In the charge and discharge reactions of the lithium secondary battery, lithium discharged from the positive electrode is intercalated into the negative electrode during charge, and is deintercalated from the negative electrode to return to the positive electrode again during discharge. In the case of the silicon-based negative electrode active material, the volume change and the surface side reaction are severe, so that a large amount of lithium intercalated in the negative electrode during initial charge does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

However, the physicochemical method of the related art involves a possibility of danger, such as fire and explosion, due to environmental factors that the method should be performed at high temperatures. In addition, the electrochemical method of the related art cannot uniformly control the initial irreversible capacity and increases production cost.

In particular, in the lithium metal transfer process, it is difficult to transfer lithium metal safely and easily, and even if lithium metal is transferred, the highly reactive lithium metal immediately starts reacting with the negative electrode active material, thereby causing problems such as particle breakage on the surface of the negative electrode active material layer.

Therefore, in pre-lithiating the negative electrode, it is necessary to research a process and a material that can more safely and efficiently pre-lithiate lithium metal in a negative electrode active material layer uniformly.

CITATION LIST

Patent Literature 1: Japanese Patent Application Publication No. 2009-080971

[Detailed Description of the Invention]

[Technical Problem]

In the pre-lithiation of the transfer method, the inventors have conducted a research on a method capable of transferring lithium metal to a top of the negative electrode active material layer more safely and efficiently, and have found that when a buffer layer having a specific composition, content and thickness is included on the top of the negative electrode active material layer, direct contact with lithium metal can be prevented and a rate of pre-lithiation can also be regulated as desired.

The present invention has been made in an effort to provide a negative electrode for a lithium secondary battery, a method for manufacturing a negative electrode for a lithium secondary battery, and a lithium secondary battery including the negative electrode.

[Technical Solution]

An exemplary embodiment of the present invention provides a negative electrode for a lithium secondary battery including a negative electrode current collector layer; a negative electrode active material layer including a negative electrode active material layer composition formed on one surface or both surfaces of the negative electrode current collector layer; and a buffer layer including a buffer layer composition provided on a surface opposite to a surface of the negative electrode active material layer facing the negative electrode current collector layer, wherein the buffer layer has a thickness of 0.1 um or more and 2 um or less, wherein the buffer layer composition includes one or more materials selected from the group consisting of an acrylic polymer and a binder, and a conductive material, and wherein the conductive material is 1 part by weight or more and 10 parts by weight or less on the basis of 100 parts by weight of the buffer layer composition.

Another exemplary embodiment of the present invention provides a method for manufacturing a negative electrode for a lithium secondary battery, the method including forming a negative electrode current collector layer and forming a negative electrode active material layer on one surface or both surfaces of the negative electrode current collector layer; forming a negative electrode for a lithium secondary battery including a buffer layer by coating a buffer layer composition on a surface opposite to a surface of the negative electrode active material layer facing the negative electrode current collector layer; transferring lithium metal to a surface opposite to a surface of the buffer layer facing the negative electrode active material layer; and pre-lithiating the negative electrode active material layer, wherein the buffer layer composition includes one or more materials selected from the group consisting of an acrylic polymer and a binder, and a conductive material, and wherein the conductive material is 1 part by weight or more and 10 parts by weight or less on the basis of 100 parts by weight of the buffer layer composition.

Still another exemplary embodiment of the present invention provides a lithium secondary battery including a positive electrode; the negative electrode for a lithium secondary battery according to the present application; a separator provided between the positive electrode and the negative electrode; and an electrolyte.

[Advantageous Effects]

The negative electrode for a lithium secondary battery according to one embodiment of the present invention has the buffer layer having a thickness of 0.1 um or more and 2 um or less on a top of the negative electrode active material layer. In particular, the buffer layer includes one or more materials selected from the group consisting of an acrylic polymer and a binder, and the conductive material, and the conductive material is 1 part by weight or more and 10 parts by weight or less on the basis of 100 parts by weight of the buffer layer composition. Accordingly, even when lithium metal is transferred to the top of the negative electrode active material layer, lithium metal is prevented from directly contacting the highly reactive silicon-based active material, so that rapid reactions can be suppressed. In addition, a rate of pre-lithiation can be regulated to uniformly pre-lithiate lithium in the negative electrode active material layer.

As described above, the buffer layer is provided on the top of the negative electrode for a lithium secondary battery, so that the rate of pre-lithiation can be regulated to reduce side reaction products with lithium due to violent reactions on the surface of the negative electrode active material layer, thereby reducing loss of lithium metal. In addition, as the buffer layer is provided, a base layer can be immediately removed even with a very weak linear pressure after transferring lithium metal to the negative electrode active material layer, so that the heat of reaction can be easily released to suppress by-product generation on the surface of the negative electrode active material layer.

Further, upon injection of the electrolyte solution after the pre-lithiation process, one or more materials selected from the group consisting of an acrylic polymer and a binder of the buffer layer on the top of the negative electrode for a lithium secondary battery dissolve and disappear, leaving only the conductive material, which may help to form a conductive network that connects the active material each other when the negative electrode active material expands or contracts later.

That is, the negative electrode for a lithium secondary battery according to the present invention has the main feature that the buffer layer having a specific composition and thickness is provided on the top of the negative electrode active material layer so that pre-lithiation can be performed more efficiently and uniformly over the entire negative electrode active material layer without loss of lithium during the pre-lithiation process according to the transfer process.

[Brief Description of Drawings]

FIG. 1 shows a process of transferring lithium metal to a negative electrode for a lithium secondary battery according to one embodiment of the present application.

FIG. 2 shows a laminated structure of a lithium secondary battery according to one embodiment of the present application.

<Explanation of Reference Numerals and Symbols>

| 10: | base layer |
|---|---|
| 20: | lithium metal |
| 30: | negative electrode active material layer |
| 35: | buffer layer |
| 40: | negative electrode current collector layer |
| 50: | separator |
| 60: | positive electrode current collector layer |
| 70: | positive electrode active material layer |
| 100: | transfer laminated body |
| 200: | negative electrode for lithium secondary battery |
| 300: | positive electrode for lithium secondary Battery |

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mino II of BEL Japan. That is, in the present application, the BET specific surface area may mean the specific surface area measured by the above measurement method.

In the present specification, "Dn" means an average particle diameter, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be determined using a laser diffraction method. Specifically, the average particle diameter may be determined by dispersing powders to be measured in a dispersion medium, which is then introduced into a commercially available laser diffraction particle size measurement apparatus (for example, Microtrac S3500), measuring a difference in diffraction patterns according to the particle size when a laser beam passes through particles, and then calculating a particle size distribution.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight average molecular weight (Mw) and a number average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight means a weight average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present invention provides a negative electrode for a lithium secondary battery including a negative electrode current collector layer; a negative electrode active material layer including a negative electrode active material layer composition formed on one surface or both surfaces of the negative electrode current collector layer; and a buffer layer including a buffer layer composition provided on a surface opposite to a surface of the negative electrode active material layer facing the negative electrode current collector layer, wherein the buffer layer has a thickness of 0.1 um or more and 2 um or less, wherein the buffer layer composition includes one or more materials selected from the group consisting of an acrylic polymer and a binder, and a conductive material, and wherein the conductive material is 1 part by weight or more and 10 parts by weight or less on the basis of 100 parts by weight of the buffer layer composition.

The negative electrode for a lithium secondary battery according to the present invention has the main feature that the buffer layer having a specific composition and thickness is provided on a top of the negative electrode active material layer so that pre-lithiation can be performed more efficiently and uniformly over the entire negative electrode active material layer without loss of lithium during the pre-lithiation process.

Hereinafter, specific details of the negative electrode for a lithium secondary battery of the present invention will be described.

In one embodiment of the present application, the negative electrode current collector layer generally has a thickness of 1 um to 100 um. The negative electrode current collector layer is not particularly limited as long as it has high conductivity without causing a chemical change in the battery. For example, copper, stainless steel, aluminum, nickel, titanium, fired carbon, copper or stainless steel each surface treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In one embodiment of the present application, the negative electrode current collector layer may have a thickness of 1 um or more and 100 um or less, and the negative electrode active material layer may have a thickness of 20 um or more and 500 um or less.

However, the thicknesses may be variously modified depending on a type and use of the negative electrode used, and are not limited thereto.

One embodiment of the present application includes a negative electrode active material layer including a negative electrode active material layer composition formed on one surface or both surfaces of the negative electrode current collector layer.

In one embodiment of the present application, the negative electrode active material layer composition may include a silicon-based active material; a negative electrode conductive material; and a negative electrode binder.

In one embodiment of the present application, the silicon-based active material may include one or more selected from the group consisting of $SiO_x$ (x=0), $SiO_x$ (0<x<2), SiC, metal impurities, and a Si alloy.

In one embodiment of the present application, the silicon-based active material may include one or more selected from the group consisting of $SiO_x$ (x=0) and $SiO_x$ (0<x<2), and may include $SiO_x$ (x=0) of 70 parts by weight or more, on the basis of 100 parts by weight of the silicon-based active material.

In another embodiment, on the basis of 100 parts by weight of the silicon-based active material, $SiO_x$ (x=0) of 70 parts by weight or more, preferably 80 parts by weight or more, and more preferably 90 parts by weight or more, and 100 parts by weight or less, preferably 99 parts by weight or less, and more preferably 95 parts by weight or less, may be included.

In one embodiment of the present application, the silicon-based active material may include metal impurities. In this case, the metal impurities are a general metal material included in the silicon-based active material, and a content thereof may be 0.1 part by weight or less, on the basis of 100 parts by weight of the silicon-based active material.

In one embodiment of the present application, the silicon-based active material may particularly use pure silicon (Si) as the silicon-based active material. The use of pure silicon (Si) as the silicon-based active material may mean that, on the basis of 100 parts by weight of the total silicon-based active material as described above, pure Si particles ($SiO_x$ (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charge/discharge is high, so that only a trace amount thereof is mixed and used with a graphite-based active material. In addition, despite the above-described advantages, the initial irreversible capacity is large and the lifetime is reduced. In order to solve the problems, a pre-lithiation process of lithiating a negative electrode in advance is performed. However, if the content of the silicon-based active material is increased in order to maximize the capacity of the negative electrode, there occur problems such as particle breakage of the silicon-based active material on the surface due to high reactivity with lithium metal.

Therefore, according to the present invention, the main object of the present invention is to introduce a buffer layer having a specific thickness and composition on a top of the negative electrode active material layer in order to solve the above problems, while using only a silicon-based active material with a high content as a negative electrode active material in order to improve capacity performance.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a continuing possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charge and discharge can be prevented.

In one embodiment of the present application, the silicon-based active material generally has a characteristic BET surface area. The BET surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured in accordance with DIN 66131 (using nitrogen).

In one embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In one embodiment of the present application, the silicon-based active material may be 60 parts by weight or more, on the basis of 100 parts by weight of the negative electrode active material layer composition.

In another embodiment, on the basis of 100 parts by weight of the negative electrode active material layer composition, the silicon-based active material of 60 parts by weight or more, preferably 65 parts by weight or more, and more preferably 70 parts by weight or more, and 95 parts by weight or less, preferably 90 parts by weight or less, and more preferably 80 parts by weight or less, may be included.

The negative electrode active material layer composition according to the present application uses a conductive material and a binder capable of controlling the volume expansion rate during charge and discharge even when the silicon-based active material having a significantly high capacity is used in the above range. Accordingly, even when the silicon-based active material is within the above range, the negative electrode active material layer composition does not degrade performance of the negative electrode and has excellent output characteristics in charge and discharge.

In one embodiment of the present application, the silicon-based active material may have a non-spherical shape and its sphericity is, for example, 0.9 or less, for example, 0.7 to 0.9, for example 0.8 to 0.9, and for example 0.85 to 0.9.

In the present application, the sphericity (circularity) is determined by Formula 1, in which A is an area and P is a boundary line.

[Formula 1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of silicon-based compounds, there is a limit in that the volume rapidly expands during the charge/discharge process, resulting in damage to the conductive path formed in the negative electrode active material layer to degrade the performance of the battery.

Accordingly, in one embodiment of the present application, the negative electrode conductive material may include one or more selected from the group consisting of a point-type conductive material, a linear conductive material, and a planar conductive material.

In one embodiment of the present application, the point-type conductive material may be used so as to improve conductivity of the negative electrode, and preferably has conductivity without inducing a chemical change. Specifically, the conductive material may be at least one species selected from the group consisting of natural graphite, artificial graphite, carbon black, acetylene black, Ketjen black, channel black, furnace black, lamp black, thermal black, a conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In one embodiment of the present application, the point-type conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In one embodiment of the present application, the particle diameter of the point-type conductive material may be 10 nm to 100 nm, preferably 20 nm to 90 nm, and more preferably 20 nm to 60 nm.

In one embodiment of the present application, the conductive material may include a planar conductive material.

The planar conductive material can improve conductivity by increasing surface contact between silicon particles in the negative electrode and at the same time suppress the disconnection of the conductive path due to the volume expansion, and may be expressed as a plate-shaped conductive material or a bulk-type conductive material.

In one exemplary embodiment of the present application, the planar conductive material may include at least one selected from the group consisting of plate-like graphite, graphene, graphene oxide, and graphite flakes, and preferably may be plate-like graphite.

In one embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In one embodiment of the present application, there is provided a negative electrode composition in which the planar conductive material having D10 of 0.5 um or more and 1.5 um or less, D50 of 2.5 um or more and 3.5 um or less and D90 of 7.0 um or more and 15.0 um or less.

In one embodiment of the present application, for the planar conductive material, a planar conductive material with a high specific surface area having a high BET specific surface area or a planar conductive material with a low specific surface area may be used.

In one embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In one embodiment of the present application, the planar conductive material may have a BET specific surface area of 1 $m^2$/g or more.

In another embodiment, the planar conductive material may have a BET specific surface area of 1 $m^2$/g or more and 500$m^2$/g or less, preferably 5 $m^2$/g or more and 300 $m^2$/g or less, and more preferably 5 $m^2$/g or more and 250 $m^2$/g or less.

In another embodiment, the planar conductive material is a planar conductive material with a high specific surface area, and the BET specific surface area may satisfy a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In another embodiment, the planar conductive material is a planar conductive material with a low specific surface area, and the BET specific surface area may satisfy a range of 1 $m^2$/g or more and 40 $m^2$/g or less, preferably 5 $m^2$/g or more and 30 $m^2$/g or less, and more preferably 5 $m^2$/g or more and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or entangled in such an orientation that longitudinal axes of the carbon nanotube units are substantially the same. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during manufacturing of the negative electrode, and can form more smoothly a conductive network in the negative electrode to improve the conductivity of the negative electrode.

In one embodiment of the present application, the negative electrode conductive material may be 10 parts by weight or more and 40 parts by weight or less, on the basis of 100 parts by weight of the negative electrode active material layer composition.

In another embodiment, the negative electrode conductive material may be 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charge and discharge, and the positive electrode conductive material serves to impart some conductivity while serving a buffer at the time of roll-pressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristic and imparting some conductivity, and are completely different from the negative electrode conductive material that is applied together with the silicon-based active material as in the present invention, in terms of composition and role.

In one embodiment of the present application, the plate-shaped conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or point-type shape so as to facilitate storage and release of lithium ions.

On the other hand, the plate-shaped conductive material that is used as the negative electrode conductive material is a material having a plane or plate shape, and may be expressed as plate-shaped graphite. That is, the plate-shaped conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has a high-capacity characteristic with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

In one embodiment of the present application, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethylcellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, and the above-mentioned materials in which a hydrogen is substituted with Li, Na, Ca, etc., and may also include various copolymers thereof.

The negative electrode binder according to one embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, a water-based binder may be used, and more specifically, a PAM-based binder may be used.

In one embodiment of the present application, there is provided a negative electrode for a lithium secondary battery including a buffer layer including a buffer layer composition provided on a surface opposite to a surface of the negative electrode active material layer facing the negative electrode current collector layer.

As described above, the buffer layer has features of preventing lithium metal from directly contacting a highly reactive silicon-based active material to suppress a rapid reaction even when lithium metal is transferred to the top of the negative electrode active material layer, and regulating a rate of pre-lithiation to uniformly pre-lithiate lithium in the negative electrode active material layer.

In one embodiment of the present application, a thickness of the buffer layer may satisfy a range of 0.1 um or more and 2 um or less.

In another exemplary embodiment, the thickness of the buffer layer may satisfy a range of 0.1 um or more and 2 um or less, preferably 0.2 um or more and 1.5 um or less, and more preferably 0.5 um or more and 1 um or less.

The buffer layer according to the present application has the above-described thickness range, so that the rate of pre-lithiation is regulated within an appropriate range to suppress generation of by-products and to enable uniform pre-lithiation within the negative electrode active material layer. That is, if the thickness of the buffer layer exceeds the above-described range, the rate of pre-lithiation is rapidly reduced, lithium metal reacts with air to generate by-products and loss, and the buffer layer remains until the battery is assembled, which increases a battery resistance, thereby lowering initial efficiency. In addition, when the thickness of the buffer layer is less than the above-described range, the rate of pre-lithiation rapidly increases because the thickness of the buffer layer is too thin, and therefore, lithium loss and by-products are generated, and particles of the silicon-based active material provided on the surface of the negative electrode active material layer are broken.

In one embodiment of the present application, the buffer layer composition may include one or more materials selected from the group consisting of an acrylic polymer and a binder, and a conductive material.

In one embodiment of the present application, there is provided the negative electrode for a lithium secondary battery in which the acrylic polymer includes one or more selected from the group consisting of polyethylene (PE), polypropylene (PP), polyacrylic acid (PAA), and polyester.

In particular, in one embodiment of the present application, the buffer layer composition includes a conductive material of a specific content.

In the buffer layer according to the present application, one or more materials selected from the group consisting of an acrylic polymer and a binder of the buffer layer dissolve and disappear upon injection of the electrolyte solution after the pre-lithiation process, leaving only the conductive material, which may help to form a conductive network that connects the active material each other when the negative electrode active material expands or contracts later.

As a result, one or more materials selected from the group consisting of the acrylic polymer and the binder can smoothly regulate the rate of the pre-lithiation process to suppress generation of by-products, act as a resistance when remaining on the top of the negative electrode later, and includes a material having a property of dissolving in the electrolyte solution, and the conductive material still remains on the top of the negative electrode and helps to improve the conductive network.

In one embodiment of the present application, there is provided the negative electrode for a lithium secondary battery in which the conductive material is 1 part by weight or more and 10 parts by weight or less, on the basis of 100 parts by weight of the buffer layer composition.

In another embodiment, the conductive material may be 1 part by weight or more and 10 parts by weight or less, preferably 3 parts by weight or more and 7 parts by weight or less, and more preferably 3 parts by weight or more and 5 parts by weight or less, on the basis of 100 parts by weight of the buffer layer composition.

In one embodiment of the present application, there is provided the negative electrode for a lithium secondary battery in which one or more materials selected from the group consisting of the acrylic polymer and the binder is 90 parts by weight or more and 99 parts by weight or less, on the basis of 100 parts by weight of the buffer layer composition.

In another embodiment, one or more materials selected from the group consisting of the acrylic polymer and the binder may be 90 parts by weight or more and 99 parts by weight or less, preferably 93 parts by weight or more and 97 parts by weight or less, and more preferably 95 parts by weight or more and 97 parts by weight or less, on the basis of 100 parts by weight of the buffer layer composition.

As described above, the conductive material of the above content is included in the buffer layer composition, so that the rate of pre-lithiation can be easily regulated, and at the same time, the buffer layer remains on the top of the negative electrode active material layer during battery assembly even after pre-lithiation, and in this case, the resistance characteristic is not lowered, and the conductive network can be enhanced.

That is, the conductive material of the above content is provided, so that the rate of pre-lithiation can be regulated, and the conductive material is included in the battery itself even after pre-lithiation, thereby exhibiting the above-described effects. If the content of the conductive material exceeds the above range, the density of the buffer layer greatly increases, so that the conductive material having a small particle size blocks pores on the surface of the electrode, thereby greatly delaying the rate of pre-lithiation, which leads to loss of lithium. In addition, if the content of the conductive material is less than the above range, the rate of pre-lithiation is very fast, the generation of by-products increases, and the breakage of the active material particles is intensified, resulting in a large loss of lithium and a low capacity retention rate of the battery.

In one embodiment of the present application, for the conductive material included in the buffer layer, the above-described negative electrode conductive material may be used without limitation, and specifically, carbon black, SWCNT, or MWCNT may be used.

In one embodiment of the present application, there is provided the negative electrode for a lithium secondary battery in which the binder included in the buffer layer composition includes a binder copolymer including a monomer containing a fluoro group, and the monomer includes a perfluoroolefin.

In one embodiment of the present application, the binder copolymer may include one or more various copolymers selected from the group consisting of polyvinylidene fluoride, polyacrylonitrile, polymethylmethacrylate, polyvinyl alcohol, carboxymethylcellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), and fluoro rubber.

In this case, in one embodiment of the present application, the binder copolymer includes a monomer containing a fluoro group.

In one embodiment of the present application, the description 'the binder copolymer includes a monomer containing a fluoro group' may mean that a monomer unit containing the fluoro group may be included in the copolymer as a monomer unit in a random, alternating or block form.

In one embodiment of the present application, the monomer containing a fluoro group may include C2-C8 fluoroolefin or perfluoroolefin such as tetrafluoroethylene (TFE), hexafluoropropylene (HFP), pentafluoropropylene and hexafluoroisobutylene.

Specifically, in one embodiment of the present application, the monomer including a fluoro group may be hexafluoropropylene (HFP).

The binder copolymer according to the present application may include the monomer of 5 parts by weight or more and 20 parts by weight or less, on the basis of 100 parts by weight of the binder copolymer.

In another embodiment, the monomer may be included in an amount of 5 parts by weight or more and 20 parts by weight or less, and preferably 8 parts by weight or more and 15 parts by weight or less, on the basis of 100 parts by weight of the binder copolymer.

The description 'the monomer is included in the above-described amount based on the binder copolymer' may mean a content of the monomer, based on the entire binder copolymer formed by reacting two or more monomers with each other.

The binder according to the present application has the above composition, so that the rate of pre-lithiation of lithium metal is appropriately regulated during pre-lithiation later, resulting in suppression of side reactions and breakage of the negative electrode active material particles.

In one embodiment of the present application, the binder copolymer may be polyvinylidene fluoride-hexafluoropropylene copolymer (PVDF-co-HFP).

In one embodiment of the present application, there is provided the negative electrode for a lithium secondary battery in which the binder is 90 parts by weight or more and 99 parts by weight or less, on the basis of 100 parts by weight of the buffer layer composition.

In another embodiment, the binder may be 90 parts by weight or more and 99 parts by weight or less, preferably 93 parts by weight or more and 97 parts by weight or less, and more preferably 95 parts by weight or more and 97 parts by weight or less on the basis of 100 parts by weight of the buffer layer composition.

In one embodiment of the present application, there is provided a method for manufacturing a negative electrode for a lithium secondary battery, the method including a step of forming a negative electrode current collector layer and a negative electrode active material layer on one surface or both surfaces of the negative electrode current collector layer; a step of forming a negative electrode for a lithium secondary battery including a buffer layer by coating a buffer layer composition on a surface opposite to a surface of the negative electrode active material layer facing the negative electrode current collector layer; a step of transferring lithium metal to a surface opposite to a surface of the buffer layer facing the negative electrode active material layer; and a step of pre-lithiating the negative electrode active material layer, wherein the buffer layer composition includes one or more materials selected from the group consisting of an acrylic polymer and a binder, and a conductive material, and wherein the conductive material is 1 part by weight or more and 10 parts by weight or less on the basis of 100 parts by weight of the buffer layer composition.

In one embodiment of the present application, the step of forming a negative electrode current collector layer and a negative electrode active material layer on one surface or both surfaces of the negative electrode current collector layer is provided.

The step is a process of laminating a lithium secondary battery, and the step of forming a negative electrode current collector layer and a negative electrode active material layer on one surface or both surfaces of the negative electrode current collector layer includes a step of coating a negative electrode slurry including a negative electrode active material layer composition on one surface or both surfaces of the negative electrode current collector layer, and the negative electrode active material layer composition may include one or more selected from the group consisting of a silicon-based active material, a negative electrode conductive material and a negative electrode binder.

In this case, the above descriptions may be applied to the descriptions of the silicon-based active material, the negative electrode conductive material, and the negative electrode binder.

In one embodiment of the present application, the negative electrode slurry may include a negative electrode active material layer composition, and a slurry solvent.

In one embodiment of the present application, a solid content of the negative electrode slurry may satisfy a range of 5% or more and 40% or less.

In another embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In one embodiment of the present application, the slurry solvent is not limited thereto as long as it can dissolve the negative electrode active material layer composition, but specifically, acetone, distilled water or NMP may be used.

The negative electrode according to one embodiment of the present application may be formed by coating and drying the negative electrode slurry on the negative electrode current collector layer.

Through the drying step, the slurry solvent in the negative electrode slurry may be dried, and then an electrode roll-pressing step may be further included.

In one embodiment of the present application, a step of forming a negative electrode for a lithium secondary battery including a buffer layer by coating a buffer layer composition on a surface opposite to a surface of the negative electrode active material layer facing the negative electrode current collector layer is provided.

The step of forming the negative electrode for a lithium secondary battery including a buffer layer by coating the buffer layer composition may include a step of coating a buffer layer composition slurry on one surface of the negative electrode active material layer.

The above description may be applied to the description of the buffer layer composition.

In one embodiment of the present application, the buffer layer composition slurry may include a buffer layer composition, and a slurry solvent.

In this case, the above description may be applied to the description of the slurry solvent.

In one embodiment of the present application, a solid content of the buffer layer composition slurry may satisfy a range of 5% or more and 40% or less.

In another embodiment, the solid content of the buffer layer composition slurry may satisfy a range of 5% or more and 40% or less, preferably 7% or more and 35% or less, and more preferably 10% or more and 30% or less.

The solid content of the buffer layer composition slurry may mean a content of the buffer layer composition included in the buffer layer composition slurry, and may mean a content of the buffer layer composition on the basis of 100 parts by weight of the buffer layer composition slurry.

In one embodiment of the present application, the conductive material in the buffer layer composition slurry may satisfy a solid content of 0.5% to 10% of the solid content.

When the solid content of the buffer layer composition slurry satisfies the above range, the particles of the buffer layer are evenly distributed without aggregation to secure a path for lithium metal during pre-lithiation, and accordingly, the rate of pre-lithiation can be smoothly regulated.

The buffer layer according to one embodiment of the present application may be formed by coating and drying the buffer layer composition slurry on the negative electrode active material layer.

In one embodiment of the present application, the drying may include a step of performing vacuum drying at a temperature of 100°C or higher for 5 hours to 15 hours.

For the coating of the buffer layer, a coating method that can be generally performed in the art may be used, and may be a coating method selected from the group consisting of dip coating, spray coating, spin coating, die coating, gravure coating, micro-gravure coating, comma coating, and roll coating, but is not limited thereto.

In one embodiment of the present application, a step of transferring lithium metal to a surface opposite to a surface of the buffer layer facing the negative electrode active material layer is included.

In general, the pre-lithiation process chemically or physically pre-lithiates lithium metal on the negative electrode, and may be specifically carried out by a lithium metal transfer process, lithium metal powder deposition, an electrochemical process, or a lithium metal deposition process, and the pre-lithiation process according to the present application may include a lithium metal transfer process.

The lithium metal transfer process can transfer highly reactive lithium metal to the top of the negative electrode active material layer more stably. In this case, a process for easily transferring lithium metal from a transfer laminated body to the top of the negative electrode active material layer is required. Regarding this, the buffer layer is formed on the top of the negative electrode active material layer according to the present application, so that the efficiency of the transfer process can also be increased.

In one embodiment of the present application, there is provided the method for manufacturing a negative electrode for a lithium secondary battery in which the step of transferring lithium metal to a surface opposite to a surface of the buffer layer facing the negative electrode active material layer includes a step of preparing a transfer laminated body including a base layer and lithium metal provided on the base layer; a step of laminating the transfer laminated body on the buffer layer so that a surface opposite to a surface of the lithium metal facing the base layer is in contact with the surface opposite to the surface of the buffer layer facing the negative electrode active material layer, and a step of removing the base layer.

In one embodiment of the present application, the deposition method for depositing the lithium metal on the base layer may be selected from evaporation deposition, chemical vapor deposition and physical vapor deposition, but is not limited thereto, and various deposition methods used in the art may be used.

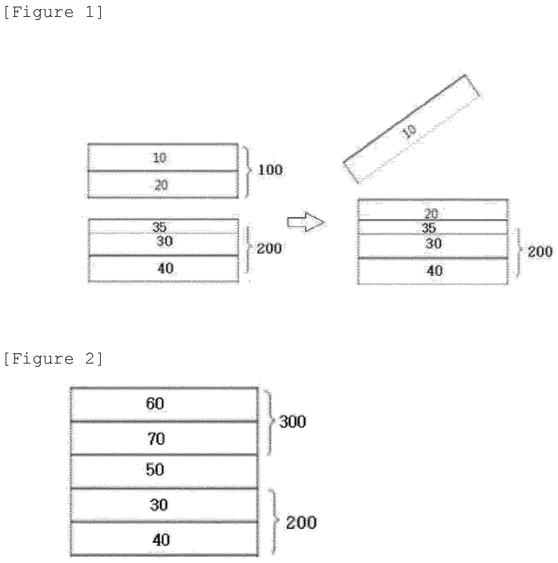

FIG. 1 shows a pre-lithiation method of a negative electrode for a lithium secondary battery according to one embodiment of the present application. Specifically, FIG. 1 shows a process of preparing a transfer laminated body 100 including a base layer 10 and lithium metal 20, laminating the transfer laminated body such that the lithium metal 20 is in contact with a buffer layer 35 of a negative electrode 200 for a lithium secondary battery, in which a negative electrode active material layer 30 is formed on a negative electrode current collector layer 40 and the buffer layer 35 is formed on the negative electrode active material layer 30, and then removing the base layer 10 to transfer only the lithium metal 20 on a top of the buffer layer 35.

In one embodiment of the present application, there is provided the method for manufacturing a negative electrode for a lithium secondary battery in which the lamination step is performed under a pressurization condition of 20 kgf/cm$^2$ to 60 kgf/cm$^2$ at a temperature condition of 60°C to 80°C.

The lamination may proceed with a transfer process through roll pressing. Thereafter, a process of removing the base layer is included. Upon removing of the base layer, the buffer layer according to the present application is included, so that direct contact with the silicon-based active material can be prevented and the transfer of lithium metal can be easily made. In addition, since the buffer layer is provided, the base layer can be easily removed with only a weak linear pressure, so the rate of pre-lithiation can be easily regulated, and the heat generated during pre-lithiation can be easily released, thereby suppressing the generation of by-products.

The reason is described. If there is no buffer layer, as in the related art, lithium metal is in direct contact with the top of the negative electrode active material layer and many by-products such as Li nitride are generated, making it difficult to transfer to the negative electrode active material layer. Accordingly, pre-lithiation is performed, including the base layer, so that lithium metal is deintercalated. However, such problems were solved by including the buffer layer satisfying the thickness and composition according to the present application.

In one embodiment of the present application, any base layer can be used without limitation as long as it can withstand process conditions such as high temperature in the step of depositing lithium metal and has a feature capable of preventing a reverse peeling problem that lithium metal is transferred onto the base layer during a winding process for transferring deposited lithium metal.

Specifically, in one embodiment of the present application, the base layer may be one or more selected from the group consisting of polyethylene terephthalate (PET), polyimide (PI), poly(methylmethacrylate)(PMMA), polypropylene, polyethylene, and polycarbonate.

In one embodiment of the present application, a thickness of the base layer may be 1 um or more and 300 um or less, and may satisfy a range of 5 um or more and 200 um or less, and 10 um or more and 100 um or less.

In one embodiment of the present application, the thickness of the lithium metal may be 1 um or more and 10 um or less, and preferably may satisfy a range of 3 um or more and 10 um or less.

When the thicknesses of the base layer and the lithium metal satisfy the above range, the transfer of the lithium metal to the negative electrode active material layer can occur efficiently and the reverse transfer can be prevented.

In one embodiment of the present application, a release layer may be further included on a surface in contact with the base layer and lithium metal of the transfer laminated body in order to improve the peelability of lithium metal and to secure transferability to the negative electrode active material layer.

That is, the base layer may have a release layer formed on at least one surface, or may have release layers formed on both surfaces. The release layer makes it possible to prevent a reverse peeling problem that lithium metal is transferred onto the base layer during a winding process for transferring deposited lithium metal to the negative electrode, and also makes it possible to easily separate the base layer after transferring lithium metal onto the negative electrode active material layer.

The release layer may include one or more selected from the group consisting of silicon-modified polyester in which a silicon chain is graft-linked to a polyester main chain, Si, melamine, and fluorine.

In one embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto.

That is, various coating methods that can be used to form a coating layer in the art can be used.

In one embodiment of the present application, even after the step of depositing and transferring the lithium metal on the metal layer, the buffer layer prevents lithium metal from directly contacting the negative electrode active material layer, thereby delaying the progress of the pre-lithiation process.

In one embodiment of the present application, there is provided the method for manufacturing a negative electrode for a lithium secondary battery in which in the step of pre-lithiating the negative electrode active material layer, the negative electrode active material layer is pre-lithiated within 30 minutes to 20 hours after transferring lithium metal.

That is, the buffer layer is included such that the pre-lithiation completion time satisfies the above range during the pre-lithiation of the negative electrode active material layer as described above, so the rate of pre-lithiation is regulated and the pre-lithiation process proceeds more smoothly. The pre-lithiation completion time may be calculated by measuring a period of time from the time of transferring the lithium metal to a time at which the transferred lithium metal is not observed on the surface of the negative electrode active material layer.

In one embodiment of the present application, there is provided a lithium secondary battery including a positive electrode; the negative electrode for a lithium secondary battery according to the present application; a separator provided between the positive electrode and the negative electrode; and an electrolyte.

The positive electrode may include a positive electrode current collector and a positive electrode active material layer formed on the positive electrode current collector and including the positive electrode active material.

In the positive electrode, the positive electrode current collector is not particularly limited as long as it has conductivity without inducing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In one embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or more.

For example, the average particle diameter (D50) of the single particles may be 1 um or more and 12 um or less, 1 um or more and 8 um or less, 1 um or more and 6 um or less, greater than 1 um and 12 um or less, greater than 1 um and 8 um or less, or greater than 1 um and 6 um or less.

Even when the single particles are formed with a small average particle diameter (D50) of 1 um or more and 12 um or less, the particle strength may be excellent. For example, the single particle may have a particle strength of 100 to 300 MPa when roll-pressing with a force of 650 kgf/cm². Accordingly, even when the single particles are roll-pressed with a strong force of 650 kgf/cm², the increase phenomenon of micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than that of the secondary particles. For example, when the composition of the precursor is the same, the firing should be performed at a temperature higher than that of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material containing a lithium complex transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate form of 30 or less primary particles, and the secondary particle may be an aggregate form of hundreds of primary particles.

In one embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 um to 20 um, 2 um to 17 $\mu$m, and preferably 3 um to 15 um. The specific surface area (BET) of the secondary particles may be 0.05 m$^2$/g to 10 m$^2$/g, preferably 0.1 m$^2$/g to 1 m$^2$/ g, and more preferably 0.3 m$^2$/g to 0.8 m$^2$/g.

In a further embodiment of the present application, the secondary particle is an aggregate of primary particles, and the average particle diameter (D50) of the primary particles is 0.5 um to 3 um. Specifically, the secondary particle may be an aggregate form of hundreds of primary particles, and the average particle diameter (D50) of the primary particles may be 0.6 um to 2.8 um, 0.8 um to 2.5 um, or 0.8 um to 1.5 um.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, thereby improving the lifetime characteristic of the battery.

In one embodiment of the present application, the average particle diameter (D50) of the single particles is smaller than the average particle diameter (D50) of the secondary particles by 1 um to 18 um.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, thereby improving the lifetime characteristic of the battery and the energy density.

According to a further embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are 15 parts by weight or more, the increase phenomenon of micro-particles in an electrode due to particle breakage in a roll-pressing process after fabrication of an electrode can be alleviated, thereby improving the lifetime characteristic of the battery.

In one embodiment of the present application, the lithium composite transition metal compound may further include secondary particles, and the secondary particles may be 85 parts by weight or less on the basis of 100 parts by weight of the positive electrode active material. The secondary particles may be 80 parts by weight or less, 75 parts by weight or less, or 70 parts by weight or less on the basis of 100 parts by weight of the positive electrode active material. The secondary particles may be 0 part by weight or more on the basis of 100 parts by weight of the positive electrode active material.

When the above range is satisfied, the above-described effects due to the existence the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In one embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as it does not cause a chemical change and has electronic conductivity in a battery. Specific examples may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

FIG. 2 shows a laminated structure of a lithium secondary battery according to one embodiment of the present application. Specifically, a negative electrode 200 for a lithium secondary battery including the negative electrode active material layer 30 on one surface of the negative electrode current collector layer 40 can be seen, a positive electrode 300 for a lithium secondary battery including a positive electrode active material layer 70 on one surface of a positive electrode current collector layer 60 can be seen, and the negative electrode 200 for a lithium secondary battery and the positive electrode 300 for a lithium secondary battery are formed in a laminated structure with a separator 50 interposed therebetween.

In this case, a part of the buffer layer used during pre-lithiation may be removed depending on the electrolyte solution used, and accordingly, a small amount thereof is included on the top of the negative electrode. In FIG. 2, the buffer layer is not shown.

In one embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF3CF2(CF_3)2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving the lifetime characteristic of the battery, suppressing a decrease in battery capacity, improving discharge capacity of the battery, and the like, in addition to the above-described electrolyte solution components.

One embodiment of the present invention provides a battery module including the lithium secondary battery as a unit cell, and a battery pack including the same. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations fall within the scope of claims included herein.

**<Examples>**

<Manufacturing of Transfer Laminated Body>

Lithium metal was deposited at a level of 6 um on the top of the PET base, on which a release layer was coated, (release layer was coated on one surface of the PET available from IONE Film, with the thickness of 20 um to 50 $\mu$m) by using a PVD method, so that a transfer laminated body was manufactured.

At this time, in the transfer laminated body, the thickness of PET was 25 $\mu$m, the release layer was coated at a level of 0.5 um, and lithium metal was deposited thereon at a level of 6 $\mu$m.

**<Manufacturing of Negative Electrode>**

Si (average particle diameter (D50): 3.5 $\mu$m) serving as a silicon-based active material, denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid content concentration: 25 wt%) .

As a mixing method, the conductive material, the binder, the thickener, and water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 8 um) serving as a negative electrode current collector with a loading amount of 85 mg/25 $cm^2$, roll-pressed, and dried in a vacuum oven at 130°C for 10 hours to form a negative electrode active material layer (thickness: 33 pm), which was prepared as a negative electrode (thickness of negative electrode: 41 um, porosity of negative electrode: 40.0%).

Thereafter, a buffer layer composition slurry was bar-coated on the top of the negative electrode active material layer to form a buffer layer having a thickness of 0.5 um to 2 um after drying.

Then, in order to transfer the transfer laminated body to the negative electrode active material layer, the lithium metal of the transfer laminated body was placed on the top of the negative electrode active material layer, and then roll-pressing was performed while applying a load of 40 kgf/cm$^2$. At this time, the temperature was set to 80°C, and the PET layer of the transfer laminated body was removed immediately after lamination, and the negative electrode was subjected to pre-lithiation.

In the manufacturing of the negative electrode, the composition of the buffer layer composition and the thickness of the buffer layer were regulated as shown in Table 1.

[Table 1]

|  | Buffer layer composition | Buffer layer composition slurry solid content | Buffer layer thickness ($\mu$m) |
|---|---|---|---|
| [Example 1] | PVDF-HFP: MWCNT=95:5 | 20 (conductive material content 5 of solid content) | 0.5 |
| [Example 2] | PVDF-HFP: MWCNT=97.5 :2.5 | 20 (conductive material content 2.5 of solid content) | 0.5 |
| [Example 3] | PVDF-HFP: MWCNT=95:5 | 20 (conductive material content 5 of solid content) | 1 |
| [Example 4] | PVDF-HFP: SWCNT=95:5 | 20 (conductive material content 5 of solid content) | 0.5 |
| [Example 5] | Polyethylene:S UPER-P=95:5 | 20 (conductive material content 5 of solid content) | 0.5 |
| Comparative Example 1 | PVDF-HFP: MWCNT=80:2 0 | 30 (conductive material content 20 of solid content) | 0.5 |
| Comparative Example 2 | PVDF-HFP: MWCNT=95:5 | 20 (conductive material content 5 of solid content) | 0.05 |
| Comparative Example 3 | PVDF-HFP: MWCNT=95:5 | 20 (conductive material content 5 of solid content) | 3 |
| Comparative Example 4 | PVDF-HFP: MWCNT=95:5 | 20 (conductive material content 5 of solid content) | 2.5 |
| Comparative Example 5 | PVDF-HFP | 20 (conductive material content 0 of solid content) | 1 |
| Comparative Example 6 (without buffer layer) | - | - | 0 |

**<Manufacturing of Lithium Secondary Battery>**

A bi-cell type battery was manufactured using the negative electrode prepared in Table 1 (pre-lithiation process was performed) and the NCM as a counter electrode. For the electrolyte solution used in this battery, 1M LiPF$_6$-dissolved ethylene carbonate (EC)/ethyl methyl carbonate (EMC) (= 3/7 (volume ratio)) was used.

**<Experimental Example>**

**<1. Initial Coulombic Efficiency Charge/Discharge Experiment>**

The bi-cell type battery manufactured above was determined for its cycle characteristics by using an electrochemical charger/discharger. The battery was charged to 4.2V (vs. Li/Li$^+$) and discharged to 2.5V (vs. Li/Li$^+$) at a current density of 0.1C up to the third cycle. From the fourth cycle, charge and discharge were performed at a current density of 0.5C under the same voltage condition.

**<2. Li Loss Calculation Experiment>**

When measuring the above initial efficiency, Li loss was measured as a difference value of the first charge capacity value.

```
Li loss (%) = 1-{("non pre-lithiation electrode

charge capacity" - "pre-lithiation electrode charge

capacity")/ theoretical capacity of lithium used during

pre-lithiation}
```

**<3. 100 Cycle Charge/Discharge Experiment>**

The bi-cell type battery manufactured above was determined for its cycle characteristics by using an electrochemical charger/discharger. 1C charge and 0.5C discharge were performed at 4.2-2.5V for 100 cycles, and the capacity retention rate was calculated based on the discharge capacity.

```
capacity retention rate (%) = (100th discharge

capacity/ 1st discharge capacity) x 100
```

**<4. Initial Cell Resistance Measurement Experiment>**

After charging the bi-cell to 4,2V at 0.33C, 2,5V discharge was performed first, and 0.33C discharge was performed up to half of the discharge capacity. At this time, a pulse current of 2.5C for 30 seconds was applied.
A resistance value was calculated by dividing a voltage difference before and after the current application by the current.
The evaluation results for the above experimental examples are shown in Table 2.

[Table 2]

|  | Initial Coulombic efficiency ) | Li loss (%) | 100 cycle coin cell capacity retention rate | initial cell resistance (mohm) @ SOC50 | pre-lithiation completion time (hr) |
|---|---|---|---|---|---|
| [Example 1] | 100 | 8 | 98 | 700 | 2 |
| [Example 2] | 98 | 10 | 97.5 | 720 | 1 |
| [Example 3] | 98.5 | 10 | 97 | 730 | 4 |
| [Example 4] | 98 | 9 | 97.5 | 720 | 2 |
| [Example 5] | 98.5 | 9 | 97 | 720 | 2.5 |
| Comparative Example 1 | 97 | 23 | 96 | 780 | 8 |
| Comparative Example 2 | 97.5 | 20 | 96.5 | 720 | 0.5 |
| Comparative Example 3 | 96 | 26 | 95 | 850 | 24 |
| Comparative Example 4 | 96 | 26 | 95 | 830 | 22 |
| Comparative Example 5 | 96 | 15 | 82 | 780 | 4 |
| Comparative Example 6 (without buffer layer) | 94 | 34 | 94 | 820 | 0.1 |

As can be seen in Table 2, it could be confirmed that Examples 1 to 5 of the present application including a specific buffer layer had features of preventing direct contact with a highly reactive silicon-based active material to suppress a rapid reaction even when lithium metal is transferred to the top of the negative electrode active material layer, and regulating a rate of pre-lithiation to uniformly pre-lithiate lithium in the negative electrode active material layer. Also, it could be confirmed that with the buffer layer on the top of the negative electrode for a lithium secondary battery, the rate of pre-lithiation was regulated to reduce side reaction products with lithium due to vigorous reaction on the surface of the negative electrode active material layer, thereby reducing the loss of lithium metal. In addition, it could be confirmed that since the buffer layer was provided, the base layer could be readily removed with only a very weak linear pressure after transferring lithium metal to the negative electrode active material layer, so that the reaction heat could be easily released, thereby suppressing the generation of by-products on the surface of the negative electrode active material layer.

In Comparative Example 1 in which the content of the conductive material included in the buffer layer exceeded the upper limit value, it could be confirmed that the rate of pre-lithiation decreased due to the increase in the content of the conductive material, and as a result, a side reaction with Li metal in the air also proceeded, resulting in a poor capacity retention rate.

In Comparative Examples 2 and 6 in which the thickness of the buffer layer was less than the lower limit range according to the present application or was not provided, it could be confirmed that the rate of pre-lithiation became very fast as the thickness of the buffer layer became thinner or was not provided (increase in rate of pre-lithiation), and as a result, cracks were formed on the surface of the electrode active material and the loss of lithium increased.

In Comparative Examples 3 and 4 in which the thickness of the buffer layer exceeded the upper limit range according to the present application, it could be confirmed that the rate of pre-lithiation was very low, and therefore, the time exposed to the air was increased and side reactions increased, resulting in an increase of lithium loss and a poor capacity retention rate.

Finally, in Comparative Example 5 in which a conductive material was not included, it could be confirmed that the rate of pre-lithiation was partially regulated to prevent loss of lithium to some extent, but the capacity retention rate after 100 cycles decreased as could be seen in the charge and discharge experiment. This is a result of disconnection of the conductive network because the conductive material is not provided on the top of the negative electrode, unlike other examples.

Accordingly, it could be confirmed that when a buffer layer of a specific composition and thickness according to the present application was provided, the reaction rate was appropriately regulated during the pre-lithiation and the conductive network was then formed, so that the performance of the battery including the buffer layer was improved.

## Claims

1. A negative electrode for a lithium secondary battery comprising:

   a negative electrode current collector layer;
   a negative electrode active material layer comprising a negative electrode active material layer composition formed on one surface or both surfaces of the negative electrode current collector layer; and
   a buffer layer comprising a buffer layer composition provided on a surface opposite to a surface of the negative electrode active material layer facing the negative electrode current collector layer,
   wherein a thickness of the buffer layer is 0.1 um or more and 2 um or less,
   wherein the buffer layer composition comprises one or more materials selected from the group consisting of an acrylic polymer and a binder, and a conductive material, and
   wherein the conductive material is present in 1 part by weight or more and 10 parts by weight or less based on 100 parts by weight of the buffer layer composition.

2. The negative electrode for a lithium secondary battery of claim 1, wherein the acrylic polymer comprises one or more selected from the group consisting of polyethylene (PE), polypropylene (PP), polyacrylic acid (PAA), and polyester.

3. The negative electrode for a lithium secondary battery of claim 1, wherein the binder comprises a binder copolymer comprising a monomer containing a fluoro group, and
   wherein the monomer comprises a perfluoroolefin.

4. The negative electrode for a lithium secondary battery of claim 1, wherein the negative electrode active material layer composition comprises a silicon-based active material, a negative electrode conductive material, and a negative electrode binder, and
   wherein the silicon-based active material comprises one or more selected from the group consisting of $SiO_x$ (x=0),

SiO$_x$ (0<x<2), SiC, metal impurities, and a Si alloy.

5. The negative electrode for a lithium secondary battery of claim 4, wherein the silicon-based active material comprises one or more selected from the group consisting of SiO$_x$ (x=0) and SiO$_x$ (0<x<2), and comprises the SiO$_x$ (x=0) of 70 parts by weight or more based on 100 parts by weight of the silicon-based active material.

6. The negative electrode for a lithium secondary battery of claim 1, wherein one or more materials selected from the group consisting of the acrylic polymer and the binder are 90 parts by weight or more and 99 parts by weight or less based on 100 parts by weight of the buffer layer composition.

7. The negative electrode for a lithium secondary battery of claim 1, wherein a thickness of the negative electrode current collector layer is 1 um or more and 100 um or less, and
wherein a thickness of the negative electrode active material layer is 20 um or more and 500 um or less.

8. A method for manufacturing a negative electrode for a lithium secondary battery, the method comprising:

forming a negative electrode current collector layer and forming a negative electrode active material layer on one surface or both surfaces of the negative electrode current collector layer;
forming a negative electrode for a lithium secondary battery including a buffer layer by coating a buffer layer composition on a surface opposite to a surface of the negative electrode active material layer facing the negative electrode current collector layer;
transferring lithium metal to a surface opposite to a surface of the buffer layer facing the negative electrode active material layer; and
pre-lithiating the negative electrode active material layer,
wherein the buffer layer composition comprises one or more materials selected from the group consisting of an acrylic polymer and a binder, and a conductive material, and
wherein the conductive material is 1 part by weight or more and 10 parts by weight or less based on 100 parts by weight of the buffer layer composition.

9. The method for manufacturing a negative electrode for a lithium secondary battery of claim 8, wherein the transferring of lithium metal to a surface opposite to a surface of the buffer layer facing the negative electrode active material layer comprises:

preparing a transfer laminated body comprising a base layer and lithium metal provided on the base layer,
laminating the transfer laminated body on the buffer layer wherein a surface opposite to a surface of the lithium metal facing the base layer is in contact with the surface opposite to the surface of the buffer layer facing the negative electrode active material layer, and
removing the base layer.

10. The method for manufacturing a negative electrode for a lithium secondary battery of claim 9, wherein the laminating is performed under a pressurization condition of 20 kgf/cm$^2$ to 60 kgf/cm$^2$ at a temperature condition of 60°C to 80°C.

11. The method for manufacturing a negative electrode for a lithium secondary battery of claim 9, wherein a release layer is further included on a surface in contact with the base layer and lithium metal of the transfer laminated body.

12. The method for manufacturing a negative electrode for a lithium secondary battery of claim 8, wherein a thickness of the lithium metal is 1 um or more and 10 um or less.

13. The method for manufacturing a negative electrode for a lithium secondary battery of claim 8, wherein in the pre-lithiating of the negative electrode active material layer, the negative electrode active material layer is pre-lithiated within 30 minutes to 20 hours after transferring lithium metal.

14. A lithium secondary battery comprising:

a positive electrode;
the negative electrode for a lithium secondary battery manufactured according to the manufacturing method of claim 8;
a separator provided between the positive electrode and the negative electrode; and

an electrolyte.

[Figure 1]

[Figure 2]

## INTERNATIONAL SEARCH REPORT

| International application No. |
| --- |
| **PCT/KR2022/019229** |

| A. | CLASSIFICATION OF SUBJECT MATTER |
| --- | --- |

**H01M 4/13**(2010.01)i; **H01M 4/131**(2010.01)i; **H01M 4/134**(2010.01)i; **H01M 4/139**(2010.01)i; **H01M 4/04**(2006.01)i; **H01M 10/42**(2006.01)i; **H01M 10/052**(2010.01)i; **H01M 4/38**(2006.01)i; **H01M 4/48**(2010.01)i; **H01M 4/62**(2006.01)i

According to International Patent Classification (IPC) or to both national classification and IPC

| B. | FIELDS SEARCHED |
| --- | --- |

Minimum documentation searched (classification system followed by classification symbols)

H01M 4/13(2010.01); H01M 10/052(2010.01); H01M 10/0525(2010.01); H01M 10/36(2006.01); H01M 4/02(2006.01); H01M 4/139(2010.01); H01M 4/1395(2010.01); H01M 4/38(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 버퍼층(buffer layer), 전리튬화(pre-lithiation), 리튬(lithium), 아크릴 (acryl), 바인더(binder), 도전재(conductive material)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2000-182602 A (FUJI PHOTO FILM CO., LTD.) 30 June 2000 (2000-06-30)<br>    See claims 1 and 26; and paragraphs [0002], [0013], [0018]-[0022], [0026]-[0028], [0078], [0080], [0083], [0085] and [0126]. | 1,6-7 |
| Y | | 2-5,8-14 |
| Y | KR 10-2019-0083305 A (LG CHEM, LTD.) 11 July 2019 (2019-07-11)<br>    See claim 1; and paragraphs [0041], [0046], [0055] and [0072]-[0073]. | 2-5,8-14 |
| A | US 2014-0272594 A1 (SION POWER CORP.) 18 September 2014 (2014-09-18)<br>    See entire document. | 1-14 |
| A | JP 2008-098151 A (SHIN ETSU CHEM CO., LTD.) 24 April 2008 (2008-04-24)<br>    See entire document. | 1-14 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 March 2023** | **21 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2"><b>PCT/KR2022/019229</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 10-2017-0058798 A (KOREA ADVANCED INSTITUTE OF SCIENCE AND TECHNOLOGY) 29 May 2017 (2017-05-29)<br>    See entire document. | 1-14 |

**INTERNATIONAL SEARCH REPORT**
Information on patent family members

International application No.

**PCT/KR2022/019229**

| Patent document cited in search report | | | Publication date (day/month/year) | Patent family member(s) | | | Publication date (day/month/year) |
|---|---|---|---|---|---|---|---|
| JP | 2000-182602 | A | 30 June 2000 | None | | | |
| KR | 10-2019-0083305 | A | 11 July 2019 | CN | 110710031 | A | 17 January 2020 |
| | | | | EP | 3686968 | A1 | 29 July 2020 |
| | | | | EP | 3686968 | B1 | 28 September 2022 |
| | | | | KR | 10-2362887 | B1 | 14 February 2022 |
| | | | | US | 2020-0067085 | A1 | 27 February 2020 |
| US | 2014-0272594 | A1 | 18 September 2014 | None | | | |
| JP | 2008-098151 | A | 24 April 2008 | JP | 5196118 | B2 | 15 May 2013 |
| | | | | KR | 10-2008-0025002 | A | 19 March 2008 |
| | | | | US | 2008-0070120 | A1 | 20 March 2008 |
| KR | 10-2017-0058798 | A | 29 May 2017 | KR | 10-1771122 | B1 | 05 September 2017 |

Form PCT/ISA/210 (patent family annex) (July 2022)

**EP 4 333 102 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210172282
- JP 2009080971 A